# EUROPEAN PATENT APPLICATION

(11) **EP 2 088 211 A1**
(43) Date of publication of application: **12.08.2009**
(21) Application number: 09159236.0
(22) Date of filing: 11.04.2008
(51) Int. Cl.: C21D 1/10, H05B 6/02, C21D 9/40

(54) **Devices for performing a localized induction hardening treatment on mechanical components, specifically thrust blocks for large-sized rolling bearings**

(30) Priority: 13.04.2007 IT TO20070263
(62) Divisional of application: 08154452.0
(71) Applicant: Saet S.p.A., 10040 Leini (TO) (IT)
(72) Inventor: Cesano, Mariolino, 13047, San Germano Vercellese (IT); Cena, Carlo, 10017, Montanaro (IT)
(74) Representative: Jorio, Paolo

(57) **Abstract**

Devices for induction hardening rolling tracks (4) of thrust blocks (2) of bearings, according to a required hardening profile consisting in either one or two inductors (15, 16) arranged in tandem within a track (4) to be hardened, at a predetermined distance from a surface (3) of the track; wherein the thrust block (2) is rotated with respect to the inductors, so as to make them cover the entire track, with a complete 360° turn; a first inductor is made by coupling solid and electrically conducting metal blocks (40, 41), mounted on a support (42) provided with cooling means (45), said blocks (40, 41) being shaped so as to divide said first inductor, in a direction of relative motion (D) between the inductor and said mechanical component, into a first and a second portions (48, 49), the first portion (48) arranged downstream of the second one (49) with respect to a sense of relative motion (V) between the inductor and said mechanical component being wider than the second one transversally to said direction of relative motion (D), so that at least an active part of said first inductor (15) is T-shaped, in a plan view from the bottom. The second inductor is made of a tube (51) of electrically conducting metal material bent to form at least two half-turns (52), each of which essentially copies the profile of a surface (3) to be hardened; the tube (51) having the inside connected to circulation means (54) of a cooling fluid and having a cylindrical core (60) made of ferromagnetic material mounted straddling across said two half-turns (52), which are saddle-shaped, and preferably brazed onto said tube (51).

## Description

The present invention relates to devices for performing a localized induction hardening treatment on mechanical components, specifically for hardening thrust block tracks of large-sized rolling bearings.

The induction hardening heat treatment of the thrust block tracks of large-sized bearings displays many problems, the most important of which are the relatively low speed of the hardening process, which does not exceed 300-350 mm/minute, inaccuracies and difficulties to obtain a desired hardening profile, which ideally requires different hardening intensities at different zones of the tracks, the need to have inductors which perfectly "copy" the transversal profile of the track and which therefore may not be used for even only slightly different thrust blocks, and the formation of a partial tempering zone, known as "soft zone".

Until now, all these problems have only been minimized but not yet solved, though to the detriment of a poor or inexistent flexibility of the employed machines.

It is thus the object of the present invention to provide an induction hardening device, which overcome the above-described drawbacks, specifically being able of ensuring high production rates and high heating uniformity of the treated parts, regardless of the shape and size of the same, displaying at the same time small dimensions and low construction and operation costs, with a considerable reduction, or even a complete elimination, of the soft zones.

The aforesaid and other objects are reached by the present invention as defined in claims 1, 9 and 10.

In practice, two inductors are used which are arranged in tandem within a track to be hardened, at a predetermined distance from a surface of the track and the thrust block is rotated with respect to the inductors, so as to make them cover the entire track, with a complete 360° turn; according to a fundamental aspect of the invention, it is used a first inductor, either as pre-heating inductor or heating inductor and either alone or in tandem with a second inductor, which first inductor is made by coupling solid and electrically conducting metal blocks, mounted on a support provided with cooling means; the blocks are shaped so as to divide said first inductor, in a direction of relative motion between the inductor and said mechanical component, into a first and a second portions, the first portion (48) arranged downstream of the second one (49) with respect to a sense of relative motion between the inductor and said mechanical component being wider than the second one transversally to said direction of relative motion, so that at least an active part of the first inductor (15) is T-shaped, in a plan view from the bottom.

The second inductor is made of a tube of electrically conducting metal material bent to form at least two half-turns, each of which essentially copies the profile of a surface to be hardened; the tube has the inside connected to circulation means (54) of a cooling fluid and having a cylindrical core made of ferromagnetic material mounted straddling across said two half-turns, which are saddle-shaped, and preferably brazed onto said tube.

In this manner, it is possible to obtain and maintain a desired hardening profile, with high quality standards, also in presence of tracks having a complex transversal profile, with the presence of concavities for the collection in use of grease for lubricating the rolling elements, without needing to make the inductors follow the profile of the track even at such concavities for grease, with great construction and standardization advantages of the inductors. Surprisingly, a drastic reduction of the extension of the soft zone is also obtained, which zone is anyway harder than those obtainable according to the state of the art.

Furthermore, the hardening devices according to the invention displays a high construction and design simplicity, and a small size as compared to the known induction heating systems for the same application and, above all, a very high flexibility which allows with a single device, and by replacing the inductors only, to harden any type of thrust block, for either radial or axial bearings, with either ball or cylindrical or barrel-shaped rolling elements, having either internal or external tracks.

Further objects and advantages of the invention will be apparent from the following description of an embodiment thereof, provided only by way of non-limitative example, with reference to the figures of the accompanying drawings, in which:
- figure 1 diagrammatically shows a perspective view of an induction hardening system based on a device according to the invention;
- figure 2 shows on enlarged scale and only diagrammatically a front perspective three-quarters view of a segment of a thrust block of an axial bearing while it is being hardened with the device and according to the method of the invention;
- figure 3 shows on enlarged scale a plan view from the bottom of a construction detail of a device according to the invention during the hardening of a thrust block of a radial bearing with external track;
- figures from 4 to 6 show three orthogonal views of a heating inductor according to the invention; and
- figures from 7 to 11 show respectively an elevational view, a plan view from the bottom and section views taken along plotting planes IX-IX, X-X and XI-XI of a pre-heating inductor according to the invention.

With reference to figures from 1 to 3, numeral 1 indicates as a whole a device for performing a localized induction hardening on a mechanical component 2; in particular, the present invention is specifically designed not for hardening generic mechanical components, but exclusively annular thrust blocks 2 of large-sized, either radial or axial, rolling bearings (which can even reach several meters in size), e.g. intended to equip wind generators, drills and special machines in general; even more specifically, the device 1 is designed, as will be seen, to harden a specific portion of each thrust block 2 consisting of a surface 3 of an annular rolling track 4 for the rolling elements of the bearings, according to a required hardening profile.

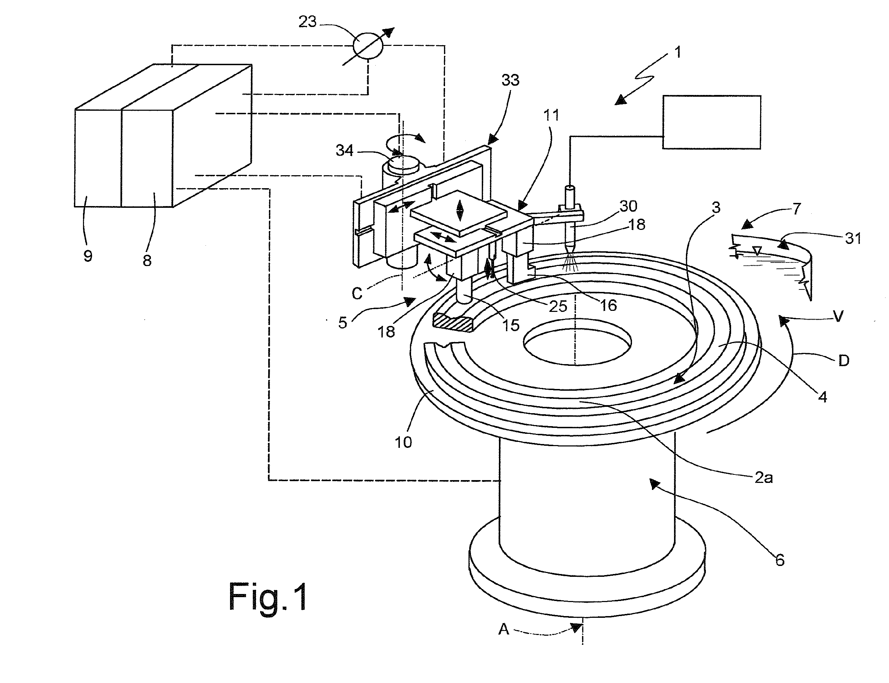

As many known hardening devices, the device 1 (figure 1) includes induction heating means 5, means 6 for moving the induction heating means 5 relative to the mechanical component 2 (hereinafter, explicit reference will be made to thrust blocks 2, but it is apparent that the following description is applicable to other types of mechanical components, if the problems to be solved are similar to those encountered when hardening the tracks 4 of the thrust blocks 2), and cooling means 7 for the mechanical component or thrust block 2. The device 1 is then completed by known means 9 for feeding electric power to the induction heating means 5, and by electronic control means 8.

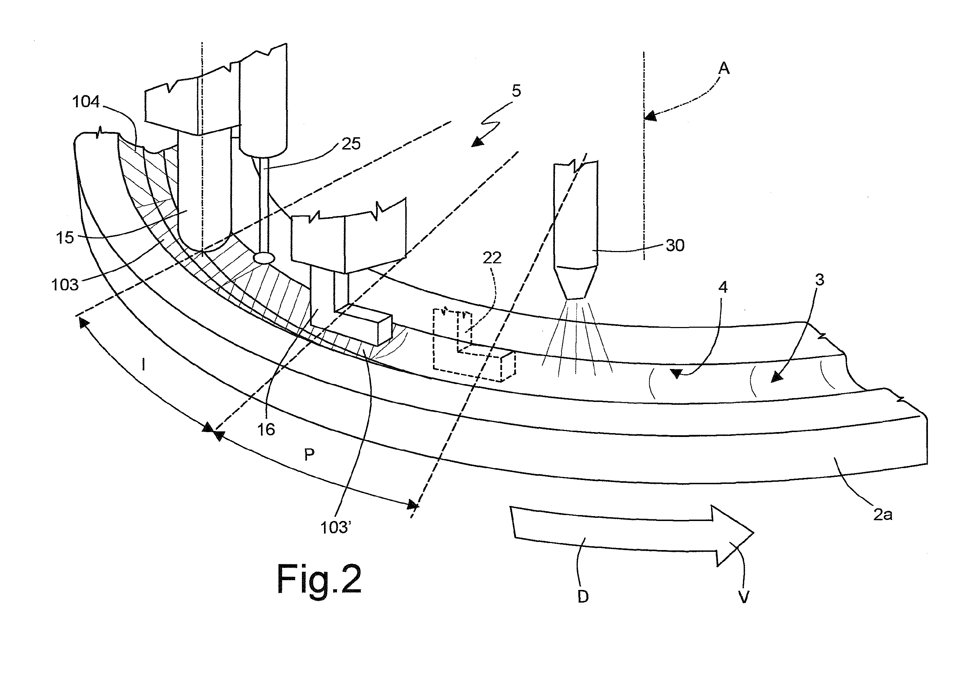

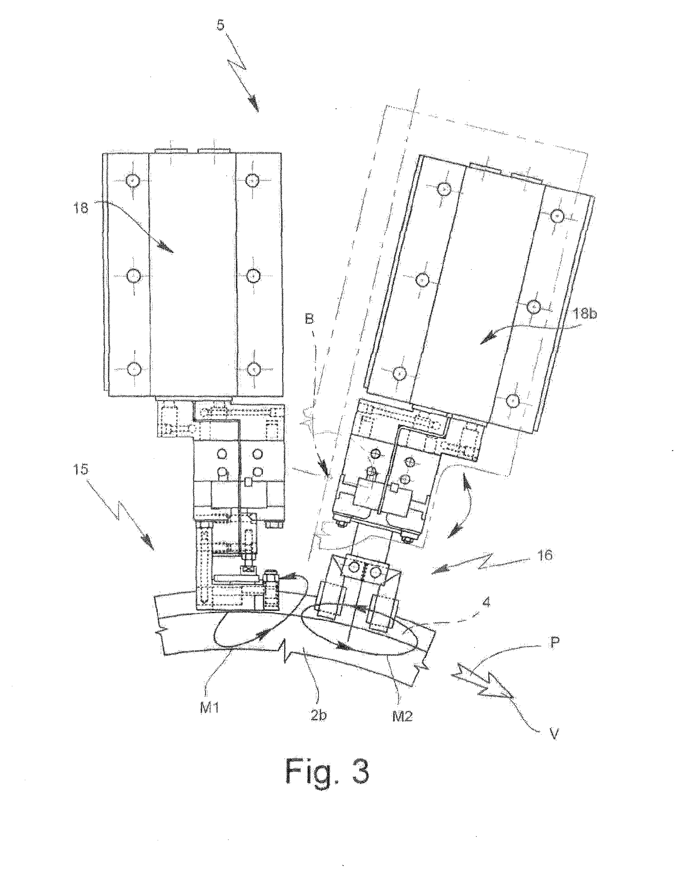

In the illustrated case, the relative moving means 6 between a thrust block 2 being machined and the induction heating means 5 consist of a motorized rotary table or support 10 controlled by electronic means 8 and usually arranged with a vertical axis; the thrust block 2 to be treated can indifferently be either a thrust block 2a (figures 1 and 2) for an axial bearing (thrust bearing), or a thrust block 2b for a radial bearing, either with external track (as in the case shown in figure 3), or with internal track, and is fixedly positioned on the table 10, which is rotated while a common support 11 of the induction heating means 5 remains steady, so that the entire track 4 progressively slides in front of the heating means 5, with a predetermined speed dependent on the rotation speed of the table 10, according to a direction of relative motion D and according to a sense of relative motion V, indicated in figures 1, 2 and 3 by an arrow.

According to an aspect of the invention, the induction heating means 5 comprise at least one first inductor 15 and a second inductor 16 (only diagrammatically shown in figures 1 and 2), each carried by a corresponding head 18 so that the inductors 15 and 16 are in use arranged in tandem (i.e. sequentially one behind the other along the direction of relative motion D) at a predetermined distance from a same surface 3 to be hardened of the track 4, so as to each sequentially move along the entire surface 3 to be hardened upon the relative motion between the induction heating means 5 and the mechanical component (thrust block) 2 integrally carried by the table 10.

Specifically, the inductors 15 and 16 are shaped so as to display, transversally to the direction of relative motion D, a profile essentially mating that of the surface 3 to be hardened of the track 4 of the thrust block 2; and, at the same time, to respectively generate at least one first and one second magnetic fields having flux lines M1 and M2 (figure 3) which are perpendicular to each other, according to the main feature of the invention.

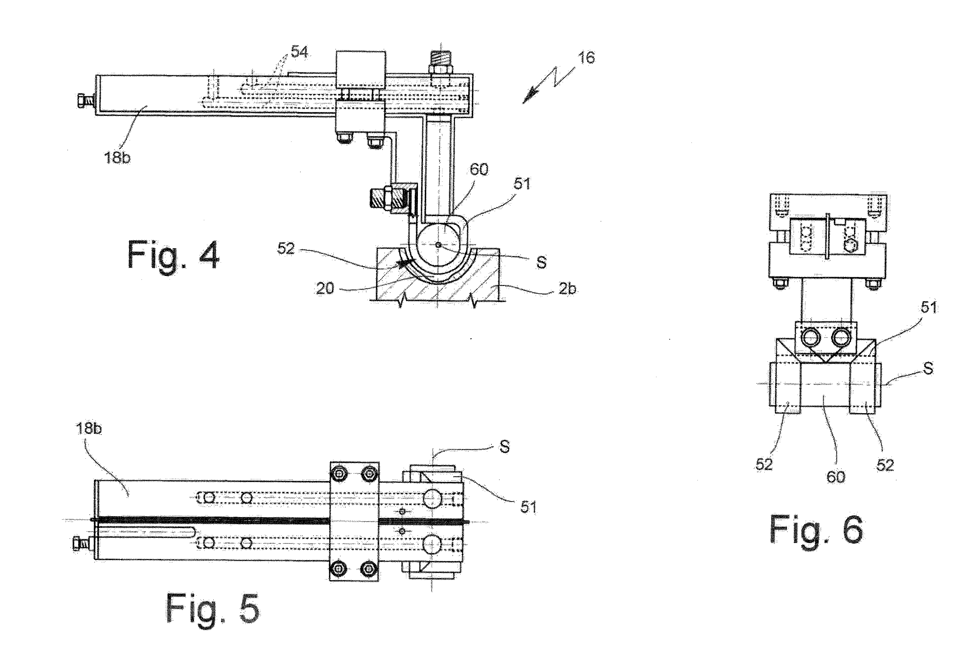

The phrase "essentially mating" hereinafter means a convex profile which copies the concave profile of the transversal section of the track 4, shown in detail in figure 4, 9 and 10, but without replicating the corresponding concavities 20 for grease (or other lubricant) usually on the bottom of the tracks 4.

At least one of the inductors 15, 16, in this case the inductor 16 shown in figure 3, is mounted on an orientable head 18b, rotatable about an axis B arranged parallelly to the rotation axis A of the table 10 and of the thrust block 2 carried thereby, so as to be able to arrange the two inductors 15, 16 oriented according to any curvature in the direction of relative motion D, in this case oriented according to the curvature of the track 4 of the thrust block 2 being machined; it is thus possible to easily and rapidly prepare the device 1 for operating with thrust blocks 2 both for axial bearings and radial bearings, and with either external or internal tracks 4.

In case, according to an aspect of the invention, the induction heating means 5 can further comprise a third inductor 22 (only diagrammatically shown with a dashed line in figure 2) arranged in tandem with the other inductors 15 and 16, either upstream or downstream of the same with respect to the sense/direction of relative motion V along the direction D.

According to another aspect of the invention, the device 1 further comprises means 23 (of a known type, which therefore are only diagrammatically indicated in figure 1) to vary the electric power fed by the means 9 to at least one of the inductors 15, 16, under the control of the electronic control means 8.

According to a further aspect of the invention, the inductors 15, 16 are reciprocally spaced apart with a center distance I of a predetermined value measured along the direction of relative motion D between the induction heating means 5 and the thrust block 2; and the device 1 further comprises feeler means 25 (of any known type in the art) to accurately detect the geometry of the surface 3 to be hardened; such feeler means are movable and arranged within the center distance I between the inductors 15, 16, transversally to the direction of relative motion D and to the track 4, and are preferably carried by the same support 11 which carries the supporting and feeding heads 18 of the inductors 15, 16.

Specifically, the feeler means 25 are carried by the support 11 so as to move in axis (i.e. along either a same axis or parallel axis) with the radial movement axis (with respect to the rotation axis A) of a fixed head 18a (figure 3), in this case shown while carrying the inductor 15, i.e. a head 18 anyway different from a head rotating about the axis B, such as the head 18b; in this manner, the distance in use of both the inductors 15, 16 from the surface to be hardened, which is fixed and adjusted according to measurements of the feeler means 25, is not affected by the curvature of the surface to be hardened.

Similarly, the cooling means 7 comprise at least one shower 30 of any known type for dispensing a cooling fluid (typically tap water at ambient temperature) mounted in tandem with the inductors 15, 16 (and 22, when present), e.g. integrally on the common support 11, immediately downstream of the inductor 16 with respect to the sense of relative motion V between the induction heating means 5 and the thrust block 2.

In case, the cooling means 7 can also further comprise a tank 31 filled with cooling fluid in which the entire table 10 with the thrust block 2 mounted thereon can be immersed if required.

The common support 11, in addition to carrying the heads 18 of the inductors and the feeler means 25, is provided with driving means to spatially displace it, with respect to the table 10 and to the mechanical component 2 arranged thereon, along at least three reciprocally orthogonal axes; in practice, the common support 11 is mounted on a numerically controlled motorized slide system 33, of known type, in turn arranged on a motorized shaft 34 rotating about an axis C parallel to the axes A and B, so that the support 11 is movable relatively to the thrust block 2 and to the corresponding table 10 on four numerically controlled axes, all controlled by the electronic control means 8, so that it is possible to change the position and orientation of the inductors 15, 16 at will, with respect to the table 10 and to the component 2 arranged thereon.

With reference to figures from 7 to 11, the inductor 15 is an inductor designed according to an aspect of the invention for pre-heating and is made, in this non-limitative illustrated case which corresponds to a preferred aspect of the invention, by coupling solid and electrically conducting metal blocks 40, 41, mounted on a support 43 provided with appropriate electrically insulating elements 44 and with cooling pipes 45, in which a cooling fluid, typically tap water, is fed in use, e.g. by means of unions 46 connected to appropriate flexible piping 47 supported by the corresponding head 18, so that an electric current is adapted in use to pass through the blocks 40, 41 along the longitudinal development thereof, the electric current (fed by the electric power feeding means 9) flowing in the direction of relative motion D between the induction heating means 5 and the thrust block 2, to generate the mentioned first magnetic field having flux lines M1 transversally directed to the direction of relative motion D and, thus, as described above, parallel to the concave profile of the surface 3 to be hardened of the track 4 of the thrust block 2 being machined.

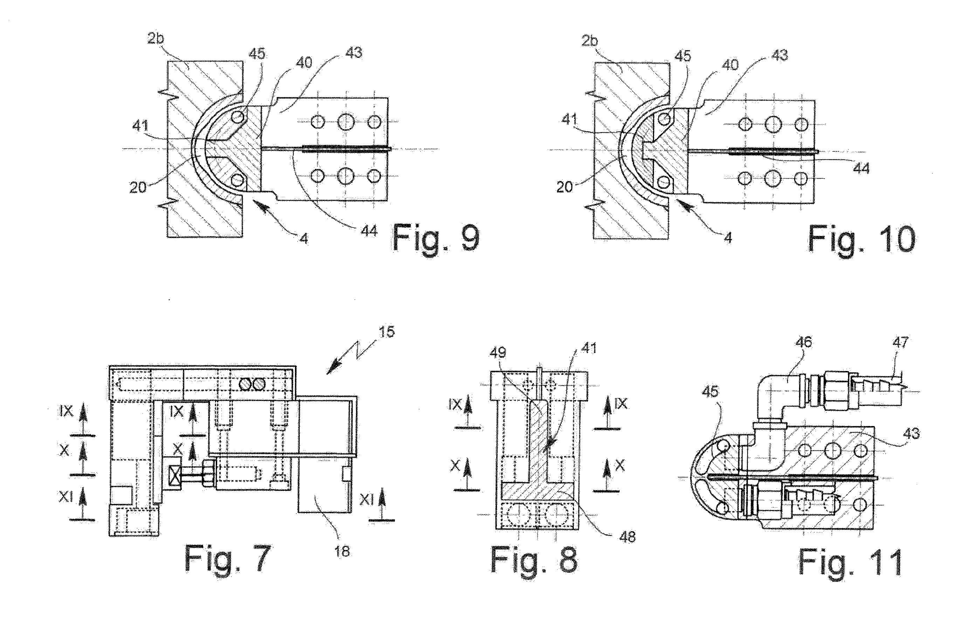

Furthermore, the blocks 40, 41 are shaped so as to divide the first inductor 15, in the direction of relative motion D, which is also the direction of longitudinal development of the blocks 40, 41, into a first portion 48 and a second portion 49 (figure 8); the first portion 48 is arranged downstream of the second one with respect to the sense of relative motion V between the induction heating means 5 and the thrust block 2 and, according to an aspect of the invention, it is wider than the second portion 49 transversally to the direction of relative motion D, so that the "active" part of the first inductor 15, in a plan view from the bottom, is T-shaped.

It has experimentally been found that by using a "solid" inductor such as the inductor 15 described above, having a T-shaped "active" part thereof, it is possible to harden the tracks of thrust blocks 2 obtaining acceptable, although not particularly marked, hardening profiles (required only for certain applications), already using a single inductor, instead of two in tandem, as necessary, according to the main aspect of the invention, to obtain the aforesaid particularly marked hardening profiles instead.

On the other hand, with reference to figures from 4 to 6, the second inductor 16 is designed, according to an aspect of the invention, for the main heating and is made by means of a rectangular section tube 51 and consists of electrically conducting material (typically copper) bent to form a half-turn 52 (in this case, two half-turns 52 each of which essentially copies the profile of the surface 3 of the track 4); the inside of the tube 51 is connected in a known manner to the piping 54 obtained at least in part inside the head 18b for circulate a cooling fluid, typically water.

In use, an electric current is adapted to pass through the tube 51, fed by electric power feeding means 9, flowing in the direction of the axis thereof, which is transversal to a symmetry axis S of the half-turns 52; it is thus adapted to generate the mentioned second magnetic field having flux lines M2 parallelly directed to the direction of relative motion D and thus perpendicular to the concave profile of the surface 3 to be hardened of the track 4 of the thrust block 2.

Finally, at least one of the inductors 15, 16, in this case the inductor 16, is provided with magnetic flux concentration means 60, in this case consisting of a cylindrical core made of ferromagnetic material mounted straddling across the half-turns 52, which are saddle-shaped, and preferably brazed onto the tube 51.

It has been experimentally found that, depending on the hardening profile to be obtained, the two inductors 15, 16 described above may even be exchanged, i.e. a "solid" type inductor with a T-shaped profile of the "active" part can be used, as the inductor 15, to perform the heating, and the inductor 16 of "traditional" type can be used for the pre-heating; in such a case, it is possible to either simply exchange the location of the inductors 15, 16, by mounting the inductor 15 on the head 18b and the inductor 16 on the head 18a, or to exchange the relative position of the heads 18a, 18b and reverse the sense of rotation V of the rotating table (obviously also reversing the position of the shower 30), so that the inductor which is moving in use in axis with the axis of movement of the feeler means 25 is always the heating one, feature which has been proven to be advantageous in terms of system reliability.

By means of the described device 1 it is possible to perform a localized induction hardening on a specific mechanical component as the thrust block 2 according to a very accurate hardening profile (diagrammatically shown with a closer dashed line in figures 4, 9 and 10).

In this manner, according to experimental test conducted by the Applicant, hardening speeds in the order of 650 mm/min to 800 mm/min (against the speeds of 300 mm/min of the prior art) are surprisingly reached and the soft zone is minimized (or even eliminated).

## Claims

1. A device (1) for performing a localized induction hardening on a mechanical component (2), specifically for hardening rolling tracks (4) of thrust blocks of bearings, according to a required hardening profile, including induction heating means (5), means (6) for relatively moving said mechanical component and said induction heating means, cooling means for the mechanical component, feeding means (9) of electric power to said induction heating means and electronic control means (8); **characterized in that** said induction heating means comprise at least a first inductor (15) made by coupling solid and electrically conducting metal blocks (40, 41), mounted on a support (42) provided with cooling means (45), so that a current is adapted in use to pass through said blocks flowing in a direction of relative motion (D) between the induction heating means and said mechanical component, to generate a first magnetic field having flux lines (M1) transversally directed to said direction of relative motion (D) and parallel to said profile of said surface to be hardened; said blocks (40, 41) being shaped so as to divide said first inductor, in said direction of relative motion (D) between the induction heating means and said mechanical component, into a first and a second portions (48, 49), the first portion (48) arranged downstream of the second one (49) with respect to a sense of relative motion (V) between the induction heating means and said mechanical component being wider than the second one transversally to said direction of relative motion (D), so that at least an active part of said first inductor (15) is T-shaped, in a plan view from the bottom.

2. A device according to Claim 1, **characterized in that** said induction heating means further comprise at least a second inductor (16) consisting of a tube (51) made of electrically conducting metal material bent to form at least one half-turn (52) and having the inside connected to circulation means (54) of a cooling fluid; a current being adapted in use to pass through said tube flowing in the direction of its axis, which is transversal to a symmetry axis (S) of said at least one half-turn to generate a second magnetic field having flux lines (M2) parallelly directed to said direction of relative motion (D) and perpendicular to said profile of said surface to be hardened.

3. Device according to Claim 2, **characterized in that** said first inductor (15) is a pre-heating inductor and **in that** said second inductor (16) is a heating inductor; or vice versa; according to said sense of relative motion (V).

4. A device according to any one of Claims 2 and 3, **characterized in that** at least said second inductor is provided with magnetic flux concentration means (60).

5. A device according to Claim 4, **characterized in that** said second inductor consists of a tube (51) made of electrically conducting metal material bent to form at least two half-turns (52), each of which essentially copies the profile of a surface (3) of the mechanical component (2) to be hardened; said magnetic flux concentration means consisting of a cylindrical core (60) made of ferromagnetic material mounted straddling across said two half-turns (52), which are saddle-shaped, and preferably brazed onto said tube (51).

6. A device according to anyone of the foregoing claims 2 to 5, **characterized in that** said first (15) and second (16) inductor are each carried by a corresponding head (18), so that said inductors are in use arranged in tandem at a predetermined distance from a same surface (3) to be hardened to move in sequence, each along the entire surface to be hardened upon said relative motion between the induction heating means and said mechanical component; said at least a first and a second inductors (15, 16) having a conformation such as to display, transversally to a direction of relative motion (D) between the induction heating means and said mechanical component, a profile essentially mating that of the surface to be hardened of the mechanical component; and at the same time to generate, respectively said at least first and second magnetic fields, which have flux lines (M1, M2) which are perpendicular to each other.

7. A device according to claim 6, **characterized in that** at least one (16) of said first and second inductors is mounted on an orientable head (18b), so as to be able to arrange the two inductors oriented according to any curvature in said direction of relative motion (D) between the induction heating means and said mechanical component.

8. A device according to any one of the preceding claims, **characterized in that** it further comprises means (23) for varying, under the control of said electronic control means (8), the electric power fed to said induction heating means (16).

9. A device for performing a localized induction hardening on a mechanical component (2), specifically for hardening rolling tracks (4) of thrust blocks of bearings, according to a required hardening profile, consisting of an inductor (15) able in use to be connected to electric power feeding means (9) and made by coupling solid and electrically conducting metal blocks (40, 41), mounted on a support (42) provided with cooling means (45), so that a current is adapted in use to be fed by the feeding means (9) to pass through said blocks flowing in a direction of relative motion (D) in use between the inductor (15) and said mechanical component, to generate a first magnetic field having flux lines (M1) transversally directed to said direction of relative motion (D) and parallel to said profile of a surface to be hardened; said blocks (40, 41) being shaped so as to divide said first inductor, in said direction of relative motion (D) between the induction heating means and said mechanical component, into a first and a second portions (48, 49), the first portion (48) arranged downstream of the second one (49) with respect to a sense of relative motion (V) between the induction heating means and said mechanical component being wider than the second one transversally to said direction of relative motion (D), so that at least an active part of said first inductor (15) is T-shaped, in a plan view from the bottom.

10. A device for performing a localized induction hardening on a mechanical component (2), specifically for hardening rolling tracks (4) of thrust blocks of bearings, consisting of an inductor (16) able in use to be connected to electric power feeding means (9) and made of a tube (51) of electrically conducting metal material bent to form at least two half-turns (52), each of which essentially copies the profile of a surface (3) of the mechanical component (2) to be hardened; said tube (51) having the inside connected to circulation means (54) of a cooling fluid; a current being adapted in use to pass from said feeding means (9) through said tube (51) flowing in the direction of its axis, which is transversal to a symmetry axis (S) of said half-turns to generate a second magnetic field having flux lines (M2) parallelly directed in use to a direction of relative motion (D) between said inductor (16) and said component (2) and perpendicular to a profile of said surface to be hardened; said inductor (16) also comprising magnetic flux concentration means consisting of a cylindrical core (60) made of ferromagnetic material mounted straddling across said two half-turns (52), which are saddle-shaped, and preferably brazed onto said tube (51).
